# EUROPÄISCHE PATENTSCHRIFT

(11) **EP 1 764 349 B1**
(45) Veröffentlichungstag und Bekanntmachung des Hinweises auf die Patenterteilung: **09.07.2008**
(21) Anmeldenummer: 05020451.0
(22) Anmeldetag: 20.09.2005
(51) Int. Cl.: C02F 103/20, C02F 3/30, C02F 3/32

(54) **Wasseraufbereitungssystem für und Verfahren zum Aufbereiten von Abwässern aus Aufzuchtanlagen für in Wasser lebende Tiere**
System and process for the treatment of wastewater from a breeding farm for animals living in water
Système et procédé pour le traitement de l'eau d'une station d'élevage des animaux aquatiques

(43) Veröffentlichungstag der Anmeldung: 21.03.2007
(73) Patentinhaber: Krautwedel, Annetraut, 21335 Lüneburg (DE)
(72) Erfinder: Krautwedel, deceased (DE)
(74) Vertreter: Schupfner, Georg

(56) Entgegenhaltungen:
- WO-A-03/042115
- CH-A5- 671 571
- DD-A- 300 015
- DE-C1- 4 323 610
- US-A- 6 159 371
- US-A1- 2003 024 874
- US-A1- 2003 217 954

## Beschreibung

Die Erfindung betrifft ein Wasseraufbereitlmgssystem für und ein Verfahren zum Aufbereiten von Abwässern aus Aufzuchtanlagen für in Wasser lebende Tiere.

Mehrstufige Kläranlagen zur biologischen Abwasserreinigung sind bekannt. So offenbart bspw. DE-C1-40 13 779 eine mehrstufige Aufbereitungsanlage bestehend aus einem Sedimentationsbecken, einem Wurzelraumbecken und einem Schönungsteich, die fließtechnisch miteinander verbunden sind. Das Wurzelraumbecken selber wird horizontal durchflossen und weist höchstens eine Tiefe von 40 cm auf.

DE-C1-40 13 779 offenbart, dass die Verwendung von Vertikalwurzelraumbecken in einem solchen System negativ ist. Ab einer Tiefe von 50 cm bilden sich Zonen, in denen Faulprozesse entstehen und unerwünschte Faulgasbildung auftritt. Die Faulgase steigen auf und treiben aus den darüberliegenden Bereichen des Wurzelraums den Luftsauerstoff aus. Das Wurzelraumbecken selber besteht aus einem Teichkörper, welcher vollständig mit Wurzeln und einer frostfesten Grenzschicht ausgestattet ist. Das Wurzelraumbecken selber weist ein Gefälle von 1 % oder weniger auf, womit der gewünschte Abwasserdurchfluss durch das Wurzelraumbecken erreicht wird. Gewünscht sind lediglich aerobe Mikroorganismen. Das Wurzelraumbecken selber wird vorzugsweise mit einer durchlässigen Lehmerde ca. 30 cm hoch verfüllt. In die Erde werden geeignete Pflanzen gepflanzt. Das Wasser, welches das Wurzelraumbecken durchflossen hat, wird über ein Dränagesystem und weitere zwischengeschaltete Stufen einem Schönungsteich zugefügt. Aus dem Ausführungsbeispiel zu diesem Dokument ergibt sich, dass im Wurzelraum lediglich Nitrifikation von Ammonium durchgeführt wird.

Nachteilig an diesem Wurzelraum ist, dass Nitrit und Nitrat, welches sich im Abwasser befindet, nicht reduziert wird und durch die ausschließliche Nitrifikation der pH-Wert des Abwassers abgesenkt wird. Dieses ist insbesondere bei Aufzuchtanlagen von in Wasser lebenden Tieren nachteilig, da es hier gewünscht ist, das Wasser im Kreislauf zu führen, um die benötigten Wassermengen zu reduzieren und somit durch den Wurzelraum eine ständige Absenkung des pH-Wertes durchgeführt wird, dem nur entgegengewirkt werden kann, indem pH-wertsteigernde Maßnahmen wie bspw. Kalkzugabe durchgeführt werden. Nachteilig hierbei ist auch, dass in einem nachfolgenden Prozessschritt eine Denitrifikation durchgeführt werden muss, da sich sonst der Nitrit- und Nitratgehalt im Kreislaufwasser erhöht, was für die Tiere schädlich ist.

Aus der DD-A-300 015 ist eine Anlage zur biologischen Nachbehandlung von vorgereinigtem, häuslichen Abwasser offenbart. Bei dieser Anlage wird ein Wurzelraum verwendet, der aus mehreren Schichten mit unterschiedlichen Milieus aufgebaut ist. Im obersten Bereich ist eine Grobsandschicht vorgesehen, in der bei guter Belüftung eine erste biologische Reinigung unter vorzugsweise aeroben Bedingungen mit teilweise Nitrifikation durchgeführt wird. Darunter folgt eine Bodenfilterschicht mit feinen Korngrössen, in der sich ein anoxisches bis anaerobes Milieu einstellt, in der eine Denitrifikation durchgeführt wird. Darunter angeordnet ist eine Bodenfilterschicht, in der ein aerobes Milieu herrscht, und aus dem dann mittels Dränage das behandelte Wasser abgezogen wird. Die unterste Schicht wird dabei zusätzlich belüftet. Die Durchlässigkeiten von oberer und unterer Schicht sind in etwa gleich, wohingegen die Durchlässigkeit der Mittelschicht sehr viel geringer ist. In der untersten Schicht wird wiederum eine Nitrifikation durchgeführt. Das aus dem Wurzelraum abgegebene Wasser wird über weitere Vorfluter oder Gräben der Umwelt zugeführt. Bei dieser Anlage nachteilig ist wiederum für den Kreislaufbetrieb in Aufzuchtanlagen von in Wasser lebenden Tieren bedingt durch die zwei Nitrifikationsstufen die Abnahme des pH-Werts, was wiederum Nachbehandlungen bedarf, damit das Wasser für die Aufzuchtanlage kontinuierlich weiterverwendbar ist. Des weiteren ist der Aufbau der Anlage kompliziert und für die Mittelschicht besteht Verstopfungsgefahr.

Eine weitere Anlage zur Aufbereitung von Abwässern aus der Fischzucht offenbart die US 5,8111,007. Details zum Aufbau bzw. Betrieb der Wurzelraumanlage sind in dieser aber nicht offenbart.

Aufgabe der vorliegenden Erfindung ist es, ein Verfahren und ein System zur Aufbereitung von Abwasser aus Aufzuchtanlagen für in Wasser lebende Tieren bereitzustellen, die auf einfache Weise hergestellt und betrieben werden können und ein weiteres Nachbehandeln der geklärten Wässer hinsichtlich Versauerung nicht notwendig ist.

Gelöst wird die Aufgabe durch das Wasseraufbereitungssystem nach Anspruch 1 bzw. das Verfahren nach Anspruch 6. Bevorzugte Ausgestaltungen sind Gegenstand der jeweiligen Unteransprüche.

Ein derartiger Wurzelraum lässt sich auf einfache Weise herstellen, wobei externe Nachbehandlungen des Wassers zur Regulierung des pH-Wertes nicht notwendig sind, damit das Wasser kontinuierlich im Kreislauf gefahren werden kann.

Vorteilhafterweise handelt es sich bei der Wurzelraumanlage um eine vertikal durchflossen Wurzelraumanlage.

Eine vorteilhafte Ausgestaltung der Erfindung sieht vor, dass die Tiefe des Wurzelraumes mindestens 1,5 m, bevorzugt mindestens 1,8 m, beträgt. Hierdurch wird gewährleistet, dass ein ausgeprägter anacrober Bereich für die Denitrifikation entsteht, um einer pH-Absenkung während der Nitrifikation durch eine Denitrifikation und die damit einhergehende pH-Erhöhung entgegenzuwirken.

Eine weitere vorteilhafte Ausgestaltung der Erfindung sieht vor, dass als Material des Wurzelraums ein Sand, besonders bevorzugt mit geringem Kiesanteil, verwendet wird. Durch die Wahl dieses Materials ist ein hinreichender Fließwiderstand für das Abwasser vorgesehen um für eine ausreichende Nitrifikation und Denitrifikation zu sorgen, wobei es vorteilhaft ist, wenn der Fließwiderstand über das gesamte Tiefenprofil im Wesentlichen konstant ist.

Weiterhin wird das in der Dränage gesammelte aufbereitete Wasser mittels Pumpe dem Schönungsteich zugeführt. Auf diese Weise wird ein Anordnen von Wurzelraum und Schönungsteich von geologischen und geographischen Gegebenheiten unabhängig zueinander gewährleistet. Des weiteren ist vorgesehen, dass die Dränage, die Pumpe und/oder der Durchflusswiderstand der Schichtung so dimensioniert sind, dass beim Abpumpen des in der Dränage enthaltenen aufbereiteten Wassers ein schockartiges Entleeren des Wurzelraums vorgenommen werden kann, wobei der Wasserstand im Wurzelraum flexibel abgesenkt wird. Dieses geschieht flexibel zur Steuerung der Parameter des dann aufbereiteten Wassers für die Zuführung in die Aufzuchtanlage in Abhängigkeit des benötigten WasserzusLandes in dem Aufzuchtbecken. Es lassen sich der pH-Wert und der Phosphorgehalt des Wassers einstellen. Soll der pH-Wert erhöht werden, wird die Absenkung reduziert und der anacrobe Bereich vergrößert. Die Vergrößerung bzw. Verkleinerung von Nitrifikations- und Denitrifikationsbereichen wird über die Sauerstoffzufuhr gesteuert.

Eine weitere Ausführungsform der Erfindung sieht vor, dass das im Wurzelraum behandelte Wasser in den Schönungsteich verstürzbar ist. Hierdurch wird das behandelte Wasser wieder mit Sauerstoff angereichert, um der Anlage wieder zugeführt zu werden.

Hinsichtlich des Verfahrens zum Aufbereiten von Abwasser von Aufzuchtanlagen für in Wasser lebende Tieren wird die Aufgabe erfindungsgemäss dadurch gelöst, dass das Abwasser in einer ersten Aufbereitungsstufe einer Nitrifikation und anschließend in derselben ersten Aufbereitungsstufe einer Denitrifikation unterzogen wird und anschließend schockartig der ersten Aufbereitungsstufe entnommen und einer zweiten Aufbereitungsstufe zugeführt wird. Das Zuführen kann vorteilhafterweise schwallartig erfolgen. Bei der ersten Aufbereitungsstufe handelt es sich um eine Wurzelraumanlage vorteilhafterweise eine solche der zuvor beschriebenen Art. Bei der zweiten Aufbereitungsstufe handelt es sich um einen Schönungsteich, vorteilhafterweise einen solchen der zuvor beschriebenen Art.

Das zuvor beschriebene Verfahren ist dahingehend vorteilhaft, dass keine weiteren Prozessschritte vorgesehen werden müssen in separaten Einheiten, um sowohl Nitrifikation als auch Denitrifikation durchzuführen und es nicht notwendig ist, zusätzlich Maßnahmen zu ergreifen, die einem abgesenkten pH-Wert entgegenwirken, um bspw. das geklärte Wasser im Kreislauf einer Aufzuchtanlage für in Wasser lebende Tieren wieder zuzuführen.

Vorteilhafterweise erfolgt die Denitrifikation in einem anaeroben Milieu in einer Tiefe > 1,0 m des Wasserstandes der ersten Aufbereitungsstufe. Hierbei ist besonders bevorzugt, dass Nitrifikation und Denitrifikation innerhalb einer Schicht bzw. innerhalb desselben Materials durchgeführt werden.

Die Erfindung sieht vor, dass das schockartige Entnehmen des durch die erste Aufbereitungsstufe aufbereiteten Abwassers eine flexible Senkung des Wasserstandes in der ersten Aufbereitungsstufe bewirkt. Dieses geschieht flexibel zur Steuerung der Parameter des dann aufbereiteten Wassers für die Zuführung in die Aufzuchtanlage in Abhängigkeit des benötigten Wasserzustandes in dem Aufzuchtbecken. Es lassen sich der pH-Wert und der Phosphorgehalt des Wassers einstellen. Soll der pH-Wert erhöht werden, wird die Absenkung reduziert und der anaerobe Bereich vergrößert. Die Vergrößerung bzw. Verkleinerung von Nitrifikations- und Denitrifikationsbereichen wird über die Sauerstoffzufuhr gesteuert. Dem Wurzelraum der ersten Aufbereitungsstufe wird durch das Absenken des Wasserstandes tiefenflexibel Sauerstoff zugeführt.

Des Weiteren sicht eine vorteilhafte Ausführungsform der Erfindung vor, dass das aufbereitete Wasser über das Tiefenprofil in der ersten Aufbereitungsstufe einen im wesentlichen gleichen Fließwiderstand erfährt. Besonders bevorzugt ist, wenn dieser gleiche Fließwiderstand durch dasselbe Material herbeigeführt wird.

Nachfolgend wird die Erfindung anhand von einem durch Zeichnungen beschriebenen Ausführungsbeispiel näher erläutert. In dem Ausführungsbeispiel zeigt:
Fig. 1 eine schematische Darstellung einer Aufzuchtanlage für in Wasser lebende Tiere unter Verwendung eines erfindungsgemäßen Wasseraufbereitungssystems und
Fig. 2 einen Querschnitt durch ein erfindungsgemäßes Wasseraufbereitungssystem.

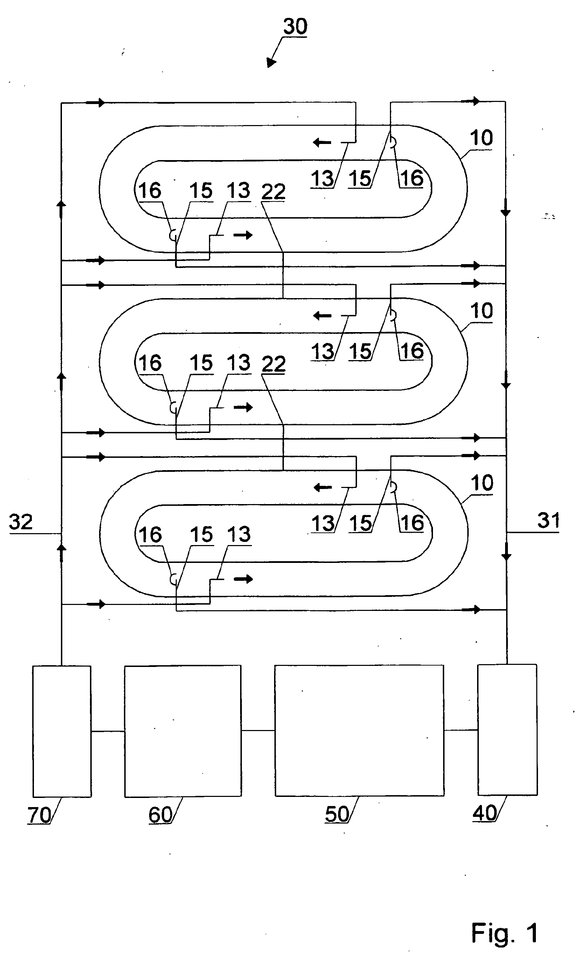

Fig. 1 zeigt eine schematische Ansicht einer Aufzuchtanlage 30 für in Wasser lebende Tieren, bspw. Fischen oder Schalentiere, die mehrere in sich geschlossene Rinnensysteme aufweist. Die Rinnensysteme 10, die aus Rinnenelementen zusammengesetzt sind, sind dabei über Verbindungen 22 miteinander verbunden. In ihnen werden die Tiere unter artgerechten Bedingungen aufgezogen.

Ausströmungen 15 mit Abströmern 16 zur Entnahme von Abwasser (das nachfolgend Ablaufwasser genannt wird) und Tierausscheidungen sind mit einer Zentralabfuhr 31 des Ablaufwassers verbunden. Das Ablaufwasser, das durch die Zentralabfuhr 31 geleitet wird, kann optional in einen Vorklärer 40 (bspw. einem Abschäumer oder Filter) gegeben werden. Ohne Vorklärer 40 wird das Ablaufwasser von der Zentralabfuhr 31 direkt auf eine Wurzelraumanlage 50 aufgegeben. In Fällen des Anwendens eines Vorklärers 40 erfolgt die Aufgabe anschließend nach Abgabe des Ablaufwassers aus dem Vorklärer 40 ebenfalls auf eine Wurzelraumanlage 50. Nach Durchlaufen des Reinigungsprozesses innerhalb der Wurzelraumanlage 50 wird das daraus abgezogene bzw. abgegebene Wasser in einen Schönungsteich 60 aufgegeben. Vom Schönungsteich aus kann das Wasser entweder direkt über eine Zentralzufuhr 32 den Einströmern 13 zum Zuführen des Frischwassers in die Rinnensysteme und Erzeugung von Strömung in den Rinnen zugeführt werden oder optional 1 in einer weiteren Aufbereitungphase 70 behandelt werden. In dieser weiteren Aufbereitungsanlage können UV-Desinfektionsanlagen,Sauerstoffanreicherungsanlagen und/oder Ozoninjektionsanlagen verwendet werden.

Bei manchen Tier- bzw. Fischarten ist es notwendig, dass diese vor dem Schlachten gehältert werden. Statt die Tiere zu fangen und in separate Bereiche zu überführen, ist es in einer Anlage gemäß der Erfindung möglich, das Hältern im Rinnensystem 10 durchzuführen, da bedingt durch die Rinnengeometrie und Abströmung die Rinnen so sauber sind, dass lediglich die Fütterung der Fische eingestellt werden muss und der Wasserdurchsatz erhöht wird. Dieses ist insofern vorteilhaft, da die Tiere keinen räumlichcn Wechsel über sich ergehen lassen müssen, was bei diesen für gewöhnlich in Stress und damit Produktverschlechterung ausartet.

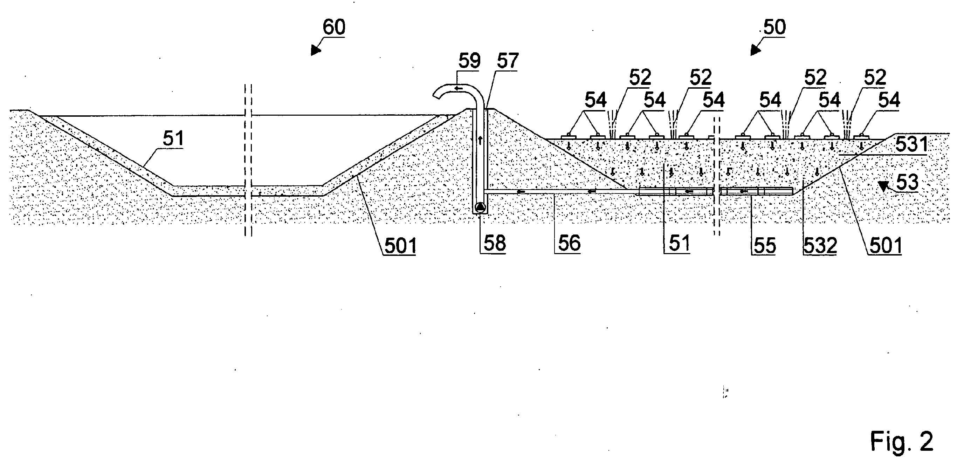

Fig. 2 beschreibt ein mögliches Aufbereitungssystem für das Abwasser, das aus den Rinnensystemen zusammen mit den Ausscheidungen der Tiere abgezogen wird. Es handelt sich dabei um eine Kombination einer Wurzelraumanlage 50 mit einem Schönungsteich 60. Innerhalb eines wasserundurchlässigen Bereiches der vorliegend durch die Anlagengrenze 501 definiert wird, wird eine kiesige Sandschicht 51 eingebracht. Im Bereich der Wurzelraumanlage 50 besteht quasi ein aus Sand und Kies bestehendes Sickerbecken, auf das das Ablaufwasser über eine Zufuhr 54 aufgegeben wird. Bei diesem Bereich handelt es sich um einen Wurzelbereich 53. Dieser besteht ebenfalls aus kiesigem Sand, in dem sich die Wurzeln der Pflanzen 52 befinden. Der Wurzelbereich 53 ist dabei aufgeteilt in einen aeroben Bereich 531, der sich nahe der Oberfläche befindet, und einen anaeroben Bereich 532, der sich im Tiefsten des Beckens befindet, vorzugsweise in einer Wassertiefe > 1,5 m. Unterhalb des Wurzelbereiches 53 ist eine Dränage 55 vorgesehen, die über einer Abfuhr 56 mit einem Pumpenraum 57 und darin integriert einer Pumpe 58 verbunden ist. Das Ablaufwasser, das zusammen mit den Ausscheidungen durch den Wurzelraum geführt wird, wird in diesem geklärt. Innerhalb des Wurzelraums findet ein Abbau von Stickstoffverbindungen statt. Der aus den Ausscheidungen entstehende Ammonium/Ammoniak wird über Nitrifikation im oberen Bereich des Wurzelraumes oxidiert. Dadurch entsteht Nitrit und auch Nitrat. Die Umwandlung selbst bewirkt ein Absenken des pH-Wertes, das sich in einem Bereich von ca. einem Punkt bewegt.

Im unteren Bereich der Wurzelraumanlage selber findet eine, Denitrifikation statt, also einer Umwandlung der Reststoffe, also Nitrat in Stickstoff unter Ausschluss von Sauerstoff. Hierbei wird der pH-Wert wieder angehoben. Der Stickstoff gelangt dann in den atmosphärischen Stickstoffkreislauf zurück.

Der Wurzelraum selber ist durch die darunterliegende Dränage und die in dem Wurzelraum befindende Sand-Kies-Matrix gut entwässerbar. Über die Pumpe 58 wird eine schockartige Entwässerung des Wurzelraumes ermöglicht, bei dem ein Absenken des Wasserspiegels innerhalb des Wurzelraumes 53 flexibel bewirkt wird, wodurch dem oberen Bereich des Wurzelraums, also dem aeroben Bereich 531, flexibel Sauerstoff zugeführt wird.

Eingetragener Phosphor wird über bestimmte Fähigkeiten von Bakterienstämmen gespeichert. Die Bakterien nehmen dann vermehrt Phosphor auf, wenn sie einem schnellcn Wechsel von anaeroben und aeroben Zuständen ausgesetzt werden. Dieses ist durch die Schockentleerung der Anlage der Fall. Phosphor ist sodann ein Pflanzennährstoff und wird aus dem Wasser ausgetragen. Ist ein stärkerer Phosphorabbau notwendig, wird der Wurzelraum 53 zuerst nur gering entleert. Anschließend folgt eine tiefe Entleerung. Dieses wird im Wechsel fortgesetzt, wodurch die Bakterien vermehrt Phosphor anlagern. Es wird einer Eutrophierung und damit Algenbildung in der Anlage entgegengewirkt.

Das schockartig entnommene Wasser wird von der Pumpe über das Versturzrohr 59 in den Schönungsteich 60 verstürzt. Im Schönungsteich selbst erfolgt eine biologische Nachbehandlung des Wassers sowie eine natürliche Anreicherung des Wassers mit Sauerstoff über die Wasseroberfläche. Eine Möglichkeit der biologischen Nachbehandlung ist das Einsetzen von Teichmuscheln innerhalb des Schönungsteiches, um bspw. eine weitere biologische Reinigung und gleichzeitig eine Reduzierung von Algen zu erreichen.

Durch die hohe Sauerstoffkonzentration im aeroben Bereich 531 wird darüber hinaus auch eine gute Keimreduzierung innerhalb des Wassers ermöglicht.

Das über die Wurzelraumanlage 50 und den Schönungsteich 60 geklärte Wasser kann anschließend weiteren Aufbereitungsstufen in der Aufbereitung 70 zugeführt werden. Hierbei sind als weitere mögliche Behandlungsstufen, die bspw. zur Keimfreihaltung des Wasser dienen oder auch bereits in einer Vorklärung 40 eingesetzt werden können, Abschäumer, UV-Desinfikation und Ozoninjektoren einsetzbar,

### Bezugszeichenliste

10 : Rinnensystem
13 Einströmer
15 Ausströmung
16 Abströmer
22 Verbindung
30 Anlage
31 : Zentralabfuhr
32 : Zentralzufuhr
40 : Vorklärung
50 : Wurzelraumanlage
501 : Anlagengrenze
51 Sand/Kies
52 Pflanzen
53 Wurzelbereich
531 : aerober Bereich
532 : anaerober Bereich
54 Zufuhr des aufzubereitenden Wassers
55 : Dränage
56 Abfuhr aus Dränage
57: Pumpenraum
58 : Pumpe
59 : Versturzrohr
60 : Schönungsteich
70 : Aufbereitung

## Patentansprüche

1. Wasseraufbereitungssystem für Aufzuchtanlagen von in Wasser lebenden Tieren
• mit einer Wurzelraumanlage (50) und
• einem abflussseitig damit verbundenen Schönungsteich (60),
• wobei die Wurzelraumanlage (50) einen mit aufzubereitendem Wasser gefüllten Pflanzenwurzelraum (53) und eine darunter liegende Dränage (55) zur Abfuhr des behandelten Wassers und mindestens einen Zufluss (54) für aufzubereitendes Wasser versehen ist,
**dadurch gekennzeichnet, dass**
• eine Pumpe (58) die Abfuhr des behandelten Wassers und ein flexibles Absenken des Wasserstandes im Pflanzenwurzelraum (53) bewirkt,
• der Pflanzenwurzelraum (53) eine solche Tiefe aufweist, dass im tiefsten Bereich des Wurzelraums ein anaerobes Milieu (532) vorherrscht, um eine Denitrifikation durchzuführen,
• der Pflanzenwurzelraum (53) eine gleichförmige Schichtung über das Tiefenprofil aufweist und
• Wasser des Schönungsteichs dem Kreislauf einer Aufzuchtanlage für im Wasser lebende Tiere zugeführt ist.

2. System nach Anspruch 1, **dadurch gekennzeichnet, dass** die Tiefe mindestens 1,5 m, bevorzugt mindestens 1,8 m, beträgt.

3. System nach Anspruch 1 oder 2, **dadurch gekennzeichnet, dass** es sich bei einem Material des Pflanzenwurzelraums (53) um einen Sand (59), bevorzugt mit geringem Kiesanteil, handelt.

4. System nach einem der Ansprüche 1 bis 3, **dadurch gekennzeichnet, dass** das in der Dränage (55) gesammelte Wasser mittels der Pumpe (58) dem Schönungsteich (60) zuführbar ist.

5. System nach Anspruch 4, **dadurch gekennzeichnet, dass** Dränage (55), Pumpe (58) und/oder Pflanzenwurzelraum (53) so dimensioniert sind, dass der Wasserstand im Pflanzenwurzelraum (53) schockartig flexibel absenkbar ist.

6. Verfahren zum Aufbereiten von Abwässern aus Aufzuchtanlagen für in Wasser lebende Tiere unter Verwendung eines mit dem aufzubereitendem Abwasser gefüllten Pflanzenwurzelraums (53) als erster Aufbereitungsstufe, einer darunter liegenden Dränage (55) und einer Pumpe (58), bei dem das Abwasser in dem Pflanzenwurzelraum (53) einer Nitrifikation und anschließend einer Denitrifikation unterzogen wird, **dadurch gekennzeichnet, dass**
• der Pflanzenwurzelraum (53) eine solche Tiefe aufweist, dass im tiefsten Bereich des Wurzelraums ein anaerobes Milieu (532) vorherrscht, um eine Denitrifikation durchzuführen,
• die Pumpe (58) Wasser aus der Dränage (55) abführt,
• die Nitrifikation und die Denitrifikation zumindest teilweise innerhalb einer Schicht durchgeführt werden,
• Wasser durch die Pumpe (58) über die Drainage schockartig dem Pflanzenwurzelraum (53) entnommen wird und einer zweiten Aufbereitungsstufe zugeführt wird, wobei durch das schockartige Entnehmen zumindest zeitweilig ein Absenken des Wasserstandes erfolgt, um tiefenflexibel Sauerstoff zuzuführen, und den aeroben Bereich zu vergrößern und zumindest zeitweilig der aerobe Bereich reduziert wird, um den anaeroben Bereich zu vergrößern, um über die Sauerstoffzufuhr eine Vergrößerung bzw. Verkleinerung von Nitrifikations- und Denitrifikationsbereich zu erreichen,
• das in der Dränage (55) gesammelte aufbereitete Wasser mittels der Pumpe (58) einem Schönungsteich (60) als zweite Aufbereitungsstufe und
• das Wasser des Schönungsteichs (60) einer Aufzuchtanlage für im Wasser lebende Tiere zugeführt wird.

7. Verfahren nach Anspruch 6, **dadurch gekennzeichnet, dass** es sich bei der ersten Autbereitungsstufe um eine Wurzelraumanlage (50) nach einem der Patentansprüche 1 bis 5 handelt.

8. Verfahren nach Anspruch 6 oder 7, **dadurch gekennzeichnet, dass** es sich bei der zweiten Aufbereitungsstufe um einen Schönungsteich (60) nach einem der Patentansprüche 1 bis 5 handelt.

9. Verfahren nach einem der Ansprüche 6 bis 10, **dadurch gekennzeichnet, dass** das aufzubereitende Wasser in der ersten Aufbereitungsstufe (50) über das gesamte Tiefenprofil der Aufbereitungsstufe (50) einen im Wesentlichen gleichen Fliesswiderstand erfährt.

## Claims

1. A water treatment system for breeding facilities for animals that live in water
• comprising a reed bed (50) and
• a clarification pond (60), which is connected thereto on the side of the outlet,
• wherein the reed bed (50) is provided with a plant reed chamber (53), which is filled with water which is to be treated and with a drainage (55), which is arranged therebelow for discharging the treated water and with at least one inflow (54) for water, which is to be treated,
**characterized in that**
• a pump (58) effects the discharge of the treated water and a flexible lowering of the water level in the plant reed chamber (53),
• the plant reed chamber (53) has such a depth that an anaerobic environment (532) prevails in the lowest area of the reed chamber for carrying out a denitrification,
• the plant reed chamber (53) encompasses a uniform layering across the depth profile and
• water of the clarification pond is supplied to the cycle of a breeding facility for animals that live in water.

2. The system according to claim 1, **characterized in that** the depth is at least 1.5 m, preferably at least 1.8 m.

3. The system according to claim 1 or 2, **characterized in that** one of the materials of the plant reed chamber (53) is sand (59), preferably comprising a small portion of gravel.

4. The system according to one of claims 1 to 3, **characterized in that** the water collected in the drainage (55) can be supplied to the clarification pond (60) by means of the pump (58).

5. The system according to claim 4, **characterized in that** the drainage (55), the pump (58) and/or the plant reed chamber (53) are dimensioned in such a manner that the water level in the plant reed chamber (53) can be flexibly lowered in a shock-like manner.

6. A method for treating sewage from breeding facilities for animals who live in water using a plant reed chamber (53), which is filled with the sewage which is to be treated, as first treatment step, a drainage (55) located therebelow and a pump (58), where the sewage in the plant reed chamber (53) is subjected to a nitrification and subsequently to a denitrification, **characterized in that**
• the plant reed chamber (53) has such a depth that an anaerobic environment (532) prevails in the lowest area of the reed chamber for carrying out a denitrification,
• the pump (58) discharges water from the drainage (55),
• the nitrification and the denitrification are at least partly carried out within a layer
• water is removed via the drainage from the plant reed chamber (53) in a shock-like manner via the pump (58) and is supplied to a second treatment step, wherein the shock-like removal at least temporarily leads to a decrease of the water level to supply depth-flexible oxygen and to increase the aerobic area and to at least temporarily decrease the aerobic area to increase the anaerobic area so as to attain an increase and decrease, respectively, of nitrification and denitrification area via the oxygen supply,
• the treated water collected in the drainage (55) is supplied to a clarification pond (60) by means of pump (58) as second treatment step and
• the water of the clarification pond (60) is supplied to a breeding facility for animals that live in water.

7. The method according to claim 6, **characterized in that** the first treatment step is a reed bed (50) according to one of patent claims 1 to 5.

8. The method according to claim 6 or 7, **characterized in that** the second treatment step is a clarification pond (60) according to one of patent claims 1 to 5.

9. The method according to one of claims 6 to 10, **characterized in that** the water which is to be treated experiences a substantially equal flow resistance in the first treatment step (50) across the entire depth profile of the treatment step (50).

## Revendications

1. Système de traitement des eaux pour des stations d'élevage d'animaux aquatiques comprenant
• une station à rhizosphère (50) et
• un bassin de clarification (60) qui y est relié du côté aval,
• où la station à rhizosphère (50) est dotée d'une cuve à rhizosphère de végétaux (53) remplie d'eau à traiter et d'un drainage (55) situé en dessous pour évacuer l'eau traitée et d'au moins une amenée (54) pour l'eau à traiter,
**caractérisé en ce que**
• une pompe (58) provoque l'évacuation de l'eau traitée et un abaissement flexible du niveau de l'eau dans la cuve à rhizosphère de végétaux (53),
• la cuve à rhizosphère de végétaux (53) comprend une profondeur telle qu'il règne au plus profond de la cuve à rhizosphère un milieu anaérobie (532) pour réaliser une dénitrification,
• la cuve à rhizosphère de végétaux (53) présente une stratification uniforme sur le profil en profondeur et
• l'eau du bassin de clarification est envoyée dans le circuit d'une station d'élevage d'animaux aquatiques.

2. Système selon la revendication 1, **caractérisé en ce que** la profondeur atteint au moins 1,5 m, de préférence au moins 1,8 m.

3. Système selon la revendication 1 ou 2, **caractérisé en ce qu'**un matériau de la cuve à rhizosphère de végétaux (53) se compose d'un sable (59), de préférence avec une faible proportion de gravier.

4. Système selon l'une des revendications 1 à 3, **caractérisé en ce que** l'eau récupérée dans le drainage (55) peut être amenée au bassin de clarification (60) au moyen de la pompe (58).

5. Système selon la revendication 4, **caractérisé en ce que** le drainage (55), la pompe (58) et/ou la cuve à rhizosphère de végétaux (53) sont dimensionnés de manière à ce que le niveau de l'eau dans la cuve à rhizosphère de végétaux (53) puisse être diminué de manière flexible par à-coups.

6. Procédé pour le traitement des eaux usées provenant de stations d'élevage d'animaux aquatiques utilisant une cuve à rhizosphère de végétaux (53) remplie d'eaux usées à traiter comme première étape de traitement, un drainage (55) situé en dessous et une pompe (58), dans lequel les eaux usées sont soumises à une nitrification et ensuite à une dénitrification dans la cuve à rhizosphère de végétaux (53), **caractérisé en ce que** :
• la cuve à rhizosphère de végétaux (53) comprend une profondeur telle qu'il règne au plus profond de la cuve à rhizosphère un milieu anaérobie (532) pour réaliser une dénitrification,
• la pompe (58) évacue l'eau du drainage (55),
• la nitrification et la dénitrification sont réalisées au moins partiellement à l'intérieur d'une couche,
• l'eau est retirée par à-coups de la cuve à rhizosphère de végétaux (53) par la pompe (58) en passant par le drainage et est envoyée à une deuxième étape de traitement, où le retrait par à-coups provoque au moins temporairement un abaissement du niveau de l'eau afin d'apporter de l'oxygène de manière flexible en profondeur et d'agrandir la zone aérobie, et au moins temporairement de réduire la zone aérobie pour agrandir la zone anaérobie dans le but d'obtenir une augmentation ou une diminution de la zone de nitrification et de dénitrification grâce à l'apport d'oxygène,
• l'eau traitée récupérée dans le drainage (55) est envoyée par la pompe (58) à un bassin de clarification (60) comme deuxième étape de traitement, et
• l'eau du bassin de clarification (60) est envoyée à une station d'élevage d'animaux aquatiques.

7. Procédé selon la revendication 6, **caractérisé en ce que** la première étape de traitement est une station à rhizosphère (50) selon l'une des revendications 1 à 5.

8. Procédé selon la revendication 6 ou 7, **caractérisé en ce que** la deuxième étape de traitement est un bassin de clarification (60) selon l'une des revendications 1 à 5.

9. Procédé selon l'une des revendications 6 à 10, **caractérisé en ce que** l'eau à traiter dans la première étape de traitement (50) prend une résistance à l'écoulement sensiblement égale sur tout le profil de profondeurs de l'étape de traitement (50).
